# EUROPÄISCHE PATENTSCHRIFT

(11) **EP 0 432 529 B1**
(45) Veröffentlichungstag und Bekanntmachung des Hinweises auf die Patenterteilung: **29.03.1995**
(21) Anmeldenummer: 90122265.3
(22) Anmeldetag: 22.11.1990
(51) Int. Cl.: H04N 7/00

(54) **Verfahren zur Übertragung von Breitbild-Videosignalen zur Darstellung auf Fernsehempfängern mit einem herkömmlichen oder einem vergrösserten Bildseitenverhältnis**
Method for transmitting widescreen videosignals to be displayed on television receivers with conventional or wider aspect ratio
Méthode de transmissions de signaux vidéo grand écran pour leur affichage sur des récepteurs de télévision à format d'image conventionnel ou agrandi

(30) Priorität: 13.12.1989 DE 3941122
(43) Veröffentlichungstag der Anmeldung: 19.06.1991
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Kays, Rüdiger, Dr,. Grundig E.M.V., W-8510 Fürth (DE)

(56) Entgegenhaltungen:
- FKT FERNSEH- UND KINO-TECHNIK, Band 43, Nr. 10, Oktober 1989, Seiten 522-524, 526; W. HABERMANN: ""Breit-PAL" - Anlass und Überlegungen zu einer Variante des PAL-Standards"
- IEEE 1989 INTERNATIONAL CONFERENCE ON CONSUMER ELECTRONICS, DIGEST OF TECHNICAL PAPERS, Rosemont, Illinois, 6. - 9. Juni 1989, Seiten 8-9, IEEE, New York, US;Y. ARAKI et al.: "Wide aspect screen NTSC compatible EDTV"
- BETTER VIDEO IMAGES, 23RD ANNUAL SMPTE TELEVISION CONFERENCE, San Francisco, CA, 3. - 4. Februar 1989, Seiten 312-360, SMPTE, Scarsdale, US; Y. ONO: "HDTV and today's broadcasting world"

## Beschreibung

Die Erfindung betrifft ein Verfahren zur Übertragung von Breitbild-Videosignalen zur Darstellung auf Fernsehempfängern mit einem herkömmlichen oder einem vergrößerten Bildseitenverhältnis mit den im Oberbegriff des Anspruchs 1 angegebenen Merkmalen. Weiterhin betrifft die Erfindung einen Sender zur Erzeugung von Videosignalen, die in einem Verfahren gemäß Anspruch 1 übertragen werden, sowie einen Empfänger zur Darstellung derartiger Videosignale.

Bei der Diskussion um zukünftige Fernsehsysteme muß unterschieden werden zwischen sog. HDTV-Systemen, welche mit einer höheren Zeilenzahl arbeiten als die heutigen Fernsehsysteme PAL, NTSC und SECAM und mit diesen nicht kompatibel sind, und verbesserten Fernsehsystemen, welche mit den heutigen Fernsehsystemen kompatibel sind.

Verbesserte kompatible Fernsehsysteme haben den Vorteil, daß die heute auf dem Markt befindlichen Empfänger auch weiterhin verwendbar sind. Die angestrebte Kompatibilität bezieht sich dabei auf das Codierverfahren und die verfügbare Kanalbandbreite, die beispielsweise in Kabelanlagen oder bei der VHF-Ausstrahlung auf 7 MHz begrenzt ist, woraus aufgrund der Restseitenbandmodulation des Trägers eine Luminanzbandbreite von maixmal 5,5 MHz resultiert.

In der Zeitschrift "SMPTE-Journal", Januar 1989, S. 14-19, werden zwei Wege zur Realisierung eines verbesserten kompatiblen (NTSC)-Fernsehsystems aufgezeigt. Der erste Weg besteht im wesentlichen darin, Chrominanzinformation nur in jedem zweiten Vollbild zu übertragen und die dazwischen liegenden Vollbilder zur Übertragung von hochauflösender Luminanzinformation zu nutzen. Der zweite Weg besteht im wesentlichen darin, zur Bildverbesserung geeignete Zusatzinformationen in dunkelgetasteten Bereichen am oberen und unteren Bildrand zu übertragen. Ein verbesserter Empfänger besitzt Schaltungen, die diese Zusatzinformationen zum Erhalt eines Bildes mit verbesserter Vertikalauflösung auswerten. Mittels eines herkömmlichen Empfängers kann ein Bild dargestellt werden, welches am oberen und unteren Rand schwarze Balken aufweist.

Ferner ist aus der Zeitschrift "Funkschau", 1989, Heft 8, S. 56, der DE-PS 38 40 054 und der Zeitschrift "Fernseh- und Kino-Technik", 1989, Nr. 8, S. 407-410, ein Verfahren zur Realisierung eines PAL-Übertragungssystems bekannt, bei dessen Verwendung auf einem Breitbildempfänger ein Bild mit einem Bildbreiten- zu Bildhöhen-Verhältnis von 16 : 9 darstellbar ist, während auf einem herkömmlichen 4 : 3-Empfänger ein Bild mit am oberen und unteren Bildrand auftretenden dunklen Streifen dargestellt werden kann.

Dazu erfolgt bildquellenseitig eine Abtastung mit einem Raster entsprechend einem vergrößerten Bild-Seitenverhältnis von 16 : 9. Danach wird mittels eines Konverters die Zeilenzahl der sichtbaren Zeilen entweder durch Weglassen jeder 4. Zeile oder mittels eines Interpolationsvorganges von 575 auf 431 reduziert. Diese verbleibenden 431 Zeilen werden spatial komprimiert und in einen symmetrisch zur Bildmitte liegenden Bereich eingesetzt. In die frei werdenden spatialen Räume am oberen und unteren Bildrand (jeweils 72 Zeilen) werden die im genannten Konverter abgesonderten Informationen, deren Amplituden bei den aus den oben genannten Literaturstellen "Funkschau" und "Fernseh- und Kino-Technik" bekannten Verfahren auf den Ultraschwarzbereich abgesenkt wurden und welche im folgenden als Zusatzsignale bezeichnet werden, eingesetzt. Das so erzeugte Signal wird über eine Übertragungsstrecke auf die Empfangsseite übertragen. Ein auf der Empfangsseite angeordneter 16 : 9-Empfänger weist eine Bildsignalverarbeitungsstufe auf, in welcher die symmetrisch zur Bildmitte übertragenen 431 Zeilen spatial dekomprimiert werden. Ferner werden in der Bildsignalverarbeitungsstufe die in jeweils 72 Zeilen am oberen und unteren Bildrand übertragenen Zusatzsignale abgetrennt und in zeitlich richtiger Reihenfolge in die spatial dekomprimierten 431 Zeilen eingefügt.

Weiterhin ist es aus der DE-PS 38 43 423 bekannt, die am oberen und unteren Bildrand übertragenen Informationen entweder mit reduziertem Modulationsgrad analog codiert zu übertragen, beispielsweise als Differenzsignal zwischen einer abgesonderten Zeile und einer räumlich oder zeitlich benachbarten Zeile, oder in Form von digitalen Stützinformationen zur Rekonstruktion abgesonderter Zeilen aus den sichtbar übertragenen Zeilen des gleichen und/oder des benachbarten Vollbildes. Durch ein derartiges Vorgehen soll die Sichtbarkeit der am oberen und unteren Bildrand übertragenen Informationen verringert und der Störabstand verbessert werden.

Aus der DE-PS 38 41 173 ist es bekannt, die Zusatzsignale zeitlich auf die Dauer eines Vollbildes zu expandieren und die expandierten Zusatzsignale einem am oberen Ende des Fernsehkanals liegenden Träger aufzumodulieren, derart, daß das resultierende Spektrum der Zusatzsignale im wesentlichen außerhalb der ZF-Durchlaßkurve herkömmlicher 4:3-Empfänger liegt. Da bei einem derartigen Vorgehen die Zusatzsignale nicht im Ultraschwarzbereich übertragen werden, können bei herkömmlichen 4:3-Empfängern die oberen und unteren Bildränder in beliebiger Einfärbung erscheinen.

Ferner ist es aus der nicht vorveröffentlichten Patentanmeldung EP-A-0 424 655 (die daher unter Artikel 54(3) EP Ü Fällt) der Anmelderin bekannt, daß bei einer Übertragung der am oberen und unteren Bildrand gelegenen Informationen im Ultraschwarzbereich Störungen der Synchronisation des Empfängers auftreten können, da sie von dessen Amplitudensiebschaltungen fälschlicherweise als Synchronimpulse interpretiert werden. Zur Lösung dieses Problems wird in der genannten Patentanmeldung vorgeschlagen, im Sender mittels einer Klemmschaltung den Schwarzpegel des Signals während der am oberen und unteren Bildrand liegenden Zeilen, in denen das Zusatzsignal ggfs. bandbegrenzt übertragen wird, auf beispielsweise 75 % der Maximalamplitude des Zeilensignals zu klemmen, wie es heute allgemein üblich ist, und während der in der Bildmitte übertragenen Zeilen beispielsweise auf 60 % der Maximalamplitude des Zeilensignals. Dadurch steht der Bereich zwischen 75 % und 60 % der Maximalamplitude des Zeilensignals für die Übertragung der am oberen und unteren Bildrand gelegenen Informationen zur Verfügung. Ein bei einem derartigen Vorgehen entstehender Nachteil besteht darin, daß die durch die beschriebene Umschaltung des Schwarzpegels bedingte Kontrastreduktion durch eine empfangsseitige geeignete Einstellung von Kontrast und Verstärkung wieder wettgemacht werden muß. Weiterhin wird bei einem derartigen Vorgehen der Video-Störabstand verschlechtert.

Ausgehend vom Stand der Technik liegt der Erfindung die Aufgabe zugrunde, einen Weg aufzuzeigen, wie die vorgenannten Nachteile vermieden werden können.

Diese Aufgabe wird im wesentlichen dadurch gelöst, daß in den am oberen und unteren Bildrand gelegenen Zeilen nur höherfrequente Signale innerhalb des verfügbaren Luminanzkanals übertragen werden.

Weitere vorteilhafte Eigenschaften der Erfindung ergeben sich aus der Erläuterung von Ausführungsbeispielen anhand der Figuren.

Es zeigt
- - Figur 1: ein Blockschaltbild zur Erläuterung des beanspruchten Systems,
- - Figur 2: ein Ausführungsbeispiel für den Frequenzumsetzer 13 von Figur 1, und
- - Figur 3: ein Ausführungsbeispiel für den Frequenzumsetzer 16 von Figur 1.

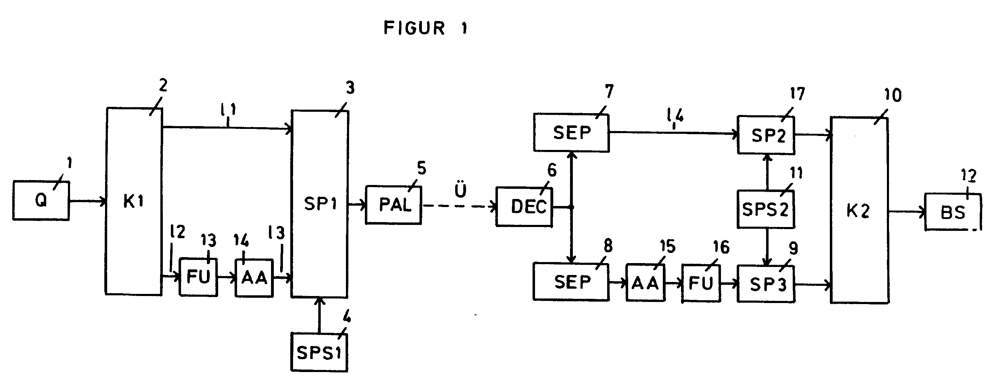

Die Figur 1 zeigt ein Blockschaltbild zur Erläuterung des beanspruchten Systems.

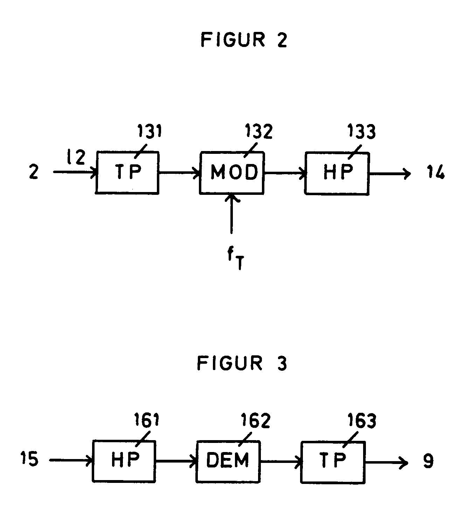

Der Sender des beanspruchten Systems enthält eine Bildsignalquelle 1, beispielsweise eine Fernsehkamera, welche an ihrem Ausgang ein Zeilensprung-Videosignal mit 625 Zeilen, einer Bildwechselfrequenz von 50 Hz und einem Bildbreiten- zu Bildhöhen-Verhältnis von 16 : 9 zur Verfügung stellt. Dieses erste Videosignal wird einem ersten Konverter 2 zugeführt. In diesem Konverter wird das Videosignal in erste Blöcke mit jeweils 4 Zeilen unterteilt. Aus jedem dieser ersten Blöcke wird entweder durch Weglassen einer Zeile oder mittels eines Interpolationsvorganges ein zweiter Block gebildet, welcher nur noch 3 Zeilen aufweist. Diese zweiten Blöcke bzw. dieses zweite Videosignal werden an einem ersten Ausgang des Konverters 2 zur Verfügung gestellt und über eine Verbindung l1 einem ersten Speicher 3 zugeführt. Ferner enthält der Konverter 2 einen zweiten Ausgang, an welchem die durch Weglassen einer Zeile oder die durch den Interpolationsvorgang abgesonderten Informationen, welche im folgenden als Zusatzsignale bezeichnet werden, zur Verfügung gestellt werden. Diese Zusatzsignale werden über eine Verbindung 12 einem ersten Frequenzumsetzer 13 zugeführt, an dessen Ausgang nur noch höherfrequente Signale, beispielsweise im Frequenzbereich zwischen 1,5 und 5 MHz, vorliegen. Eine vorteilhafte Ausgestaltung eines derartigen Frequenzumsetzers wird unten anhand der Figur 2 näher erläutert.

Das Ausgangssignal des Frequenzumsetzers 13 wird in einer ersten Amplitudenanpassungsstufe 14 in der Amplitude derart beeinflußt, daß es mit reduziertem Pegel im Ultraschwarzbereich zu liegen kommt. Das Ausgangssignal der Amplitudenanpassungsstufe 14 wird über eine Verbindung 13 dem ersten Speicher 3 zugeführt.

Der Auslesevorgang aus dem ersten Speicher 3 wird von einer ersten Speichersteuerschaltung 4 derart gesteuert, daß ein erster Teil der Zusatzsignale in am oberen Bildrand liegende Zeilen und ein zweiter Teil der Zusatzsignale in am unteren Bildrand liegende Zeilen und die dem ersten Speicher 3 über die Verbindung l1 zugeführten Signale als Bildmitteninformation in im mittleren Teil des Bildes liegende Zeilen eingefügt werden.

Das auf die vorstehend beschriebene Art und Weise erzeugte Signal wird in einem PAL-Coder 5 PAL-codiert und an eine Übertragungsstrecke Ü geleitet. Das PAL-codierte Signal wird dabei auf eine Bandbreite von maximal 5,5 MHz begrenzt.

Das über die Übertragungsstrecke Ü übertragene Signal wird in einem PAL-Decoder 6 decodiert. Aus dem decodierten Signal wird mittels einer ersten Trennschaltung 7 das im mittleren Teil des Bildes übertragene zweite Videosignal bzw. die Bildmitteninformation abgetrennt und über eine Verbindung 14 einem zweiten Speicher 17 zugeführt.

Weiterhin werden aus dem decodierten Signal mittels einer zweiten Trennschaltung 8 die am oberen und unteren Bildrand übertragenen Zusatzsignale abgetrennt. In einer zweiten Amplitudenanpassungsstufe 15, deren Funktion invers zu der der senderseitigen Amplitudenanpassungsstufe 14 ist, werden das Gleichspannungsniveau und die Amplituden der abgetrennten Zusatzsignale auf ihre ursprünglichen Werte gebracht. Das Ausgangssignal der Amplitudenanpassungsstufe 15 wird einem zweiten Frequenzumsetzer 16 zugeführt, dessen Funktion invers zu der des senderseitigen ersten Frequenzumsetzers 13 ist. Eine vorteilhafte Ausgestaltung eines derartigen Frequenzumsetzers wird unten anhand der Figur 3 näher erläutert. Das Ausgangssignal des zweiten Frequenzumsetzers 16 wird einem dritten Speicher 9 zugeführt, dessen Einschreib- und Auslesevorgänge - ebenso wie die des zweiten Speichers 17 - von einer zweiten Speichersteuerschaltung 11 gesteuert werden.

Die Auslesevorgänge aus den Speichern 9 und 17 werden derart gesteuert, daß die Zusatzsignale zeitrichtig mit der Bildmitteninformation einem zweiten Konverter 10 zugeführt werden. Dieser regeneriert aus der Bildmitteninformation und den Zusatzsignalen - beispielsweise durch Wiedereinfügen jeder 4. Zeile oder mittels eines Interpolationsvorganges - ein Videosignal mit einem Bildbreiten- zu Bildhöhen-Verhältnis von 16 : 9, welches auf dem Bildschirm 12 dargestellt wird.

Erfolgt die Darstellung eines im oben beschriebenen Sender erzeugten Videosignals auf einem herkömmlichen 4 : 3-Empfänger, dann arbeiten dessen Synchronisationsstufen störungsfrei, da in den Randzeilen nur höherfrequente Signale übertragen werden, die nicht fälschlicherweise als Synchronimpulse erkannt werden.

Die Figur 2 zeigt ein Ausführungsbeispiel für den Frequenzumsetzer 13 von Figur 1. Dem Eingang dieses Frequenzumsetzers werden die im ersten Konverter K1 erzeugten Zusatzsignale über die Verbindung 12 zugeführt. Die Zusatzsignale werden in einem Tiefpaßfilter 131 beispielsweise auf 3 MHz bandbegrenzt. Die bandbegrenzten Zusatzsignale werden in einem Modulator 132 einer Trägerfrequenz f_{T} aufmoduliert, die innerhalb der Luminanzbandbreite von maximal 5,5 MHz liegt. Diese Trägerfrequenz wird vorzugsweise von der Farbträgerfrequenz des verwendeten Farbfernsehsignals abgeleitet. Eine bevorzugte Modulationsart ist die Restseitenbandmodulation, wobei im vorliegenden Fall das untere Seitenband genutzt werden kann.

Andere bevorzugte Modulationsarten sind eine Quadraturmodulation oder eine Amplitudenmodulation. Diese Modulationsarten sind für sich bekannt, so daß an dieser Stelle von einer ausführlichen Erläuterung derselben abgesehen werden kann.

Das Ausgangssignal des Modulators 132 wird einem Hochpaßfilter 133 zugeführt, dessen untere Grenzfrequenz bei 1,5 MHz liegt. Die am Ausgang des Hochpaßfilters 133 zur Verfügung stehenden Signale, die der Amplitudenanpassungsstufe 14 zugeführt werden, enthalten demnach keine niederfrequenten Signalkomponenten.

Die Figur 3 zeigt ein Ausführungsbeispiel für den Frequenzumsetzer 16 von Figur 1. Dem Eingang dieses Frequenzumsetzers werden die Ausgangssignale der Amplitudenanpassungsstufe 15 zugeführt. Diese werden in einem Hochpaßfilter 161, dessen Grenzfrequenz beispielsweise bei 1,5 MHz liegt, von niederfrequenten Störsignalen befreit. Das Ausgangssignal des Hochpaßfilters 161 wird in einem Demodulator 162 demoduliert. Das demodulierte Signal wird schließlich über einen Tiefpaß 163, dessen Grenzfrequenz beispielsweise die Farbträgerfrequenz ist, dem Speicher 9 zugeführt.

Beim oben beschriebenen Ausführungsbeispiel wurden die Zusatzsignale, die in den Randzeilen übertragen werden, durch Weglassen einer Zeile oder mittels eines Interpolationsvorganges gewonnen. Es ist aber ebenso möglich, die Zusatzsignale auf andere Art und Weise zu ermitteln, beispielsweise dadurch, daß das erste Videosignal einer vertikalen Hochpaß-Tiefpaß-Filterung unterworfen wird und die vertikal hochfrequenten Signalanteile in den Randzeilen übertragen werden, wie es in der nicht vorveröffentlichten Patentanmeldung EP-A-0 430 202 (die daher unter Artikel 54(3) EPÜ Fällt) der Anmelderin beschrieben ist. Weiterhin können die Zusatzsignale auch sog. DATV-Daten (digitally assisted television) enthalten, die u.a. Informationen über den Bewegungsinhalt des ersten Videosignals enthalten und die empfangsseitig in einem verbesserten Empfänger zur Rekonstruktion eines Bildes mit vergrößertem Bildbreiten- zu Bildhöhen-Verhältnis verwendet werden können. Ferner können die Zusatzsignale auch andere digitale Stützinformationen enthalten, die empfangsseitig zur Bildrekonstruktion verwendet werden.

## Patentansprüche

1. Verfahren zur Übertragung von Breitbild-Videosignalen, bei dem
- senderseitig ein erstes Videosignal mit herkömmlicher Zeilenzahl und einem im Vergleich zum herkömmlichen Bildbreiten- zu Bildhöhen-Verhältnis vergrößerten Bildbreiten- zu Bildhöhen-Verhältnis erzeugt wird, aus diesem ersten Videosignal ein zweites Videosignal mit reduzierter Zeilenzahl und Zusatzsignale ermittelt werden, die Amplituden der Zusatzsignale in den Ultraschwarzbereich gelegt, und das zweite Videosignal in im mittleren Teil des Bildes liegende Zeilen und die Zusatzsignale in am oberen und unteren Bildrand liegende Zeilen eingefügt werden, und
- empfangsseitig die in am oberen und unteren Bildrand liegenden Zeilen übertragenen Zusatzsignale nach zeitlicher Umordnung und Rückumwandlung der Amplituden in ihren ursprünglichen Bereich in das im mittleren Teil des Bildes übertragene Signal eingefügt werden,
**dadurch gekennzeichnet,** daß die in am oberen und unteren Bildrand liegenden Zeilen übertragenen Zusatzsignale senderseitig von niederfrequenten Signalanteilen befreit werden.

2. Sender zur Erzeugung von Videosignalen, die in einem Verfahren nach Anspruch 1 übertragen werden, mit
- einer Videosignalquelle (1), die an ihrem Ausgang ein erstes Videosignal mit herkömmlicher Zeilenzahl und einem im Vergleich zum herkömmlichen Bildbreiten- zu Bildhöhen-Verhältnis vergrößerten Bildbreiten- zu Bildhöhen-Verhältnis zur Verfügung stellt,
- einem Konverter (2), in welchem aus dem ersten Videosignal ein zweites Videosignal mit reduzierter Zeilenzahl und Zusatzsignale ermittelt werden,
- einer Amplitudenanpassungsstufe (14), in der Amplituden der Zusatzsignale derart beeinflußt werden, daß diese mit reduziertem Pegel im Ultraschwarzbereich zu liegen kommen,
- einer Speichereinheit (3) zur Abspeicherung des zweiten Videosignals und der Zusatzsignale, und
- einer Speichersteuerschaltung (4), die den Auslesevorgang aus dem Speicher (3) derart steuert, daß das zweite Videosignal in im mittleren Teil des Bildes liegende Zeilen und die Zusatzsignale in am oberen und unteren Bildrand liegende Zeilen eingefügt werden,
**dadurch gekennzeichnet,** daß im Signalweg der Zusatzsignale ein Frequenzumsetzer (13) vorgesehen ist, dessen Ausgangssignal frei von niederfrequenten Signalanteilen ist.

3. Sender nach Anspruch 2, **dadurch** **gekennzeichnet,** daß der erste Frequenzumsetzer (13) einen Modulator (132) zur Modulation eines hochfrequenten Trägers mit den Zusatzsignalen aufweist.

4. Sender nach Anspruch 3, **dadurch** **gekennzeichnet**, daß dem Modulator (132) ein Tiefpaßfilter (131) vorgeschaltet ist.

5. Sender nach Anspruch 3 oder 4, **dadurch gekennzeichnet**, daß das Ausgangssignal des Modulators (132) einem Hochpaßfilter (133) zugeführt wird.

6. Sender nach einem oder mehreren der Ansprüche 3 - 5, **dadurch gekennzeichnet,** daß der hochfrequente Träger eine von der Farbträgerfrequenz abgeleitete Frequenz hat.

7. Empfänger zur Wiedergabe von Videosignalen, die in einem Verfahren gemäß Anspruch 1 übertragen werden, mit
- einer ersten Trennschaltung (7) zur Abtrennung des im mittleren Teil des Bildes übertragenen zweiten Videosignals aus dem übertragenen Signal,
- einer zweiten Trennschaltung (8) zur Abtrennung der am oberen und unteren Bildrand übertragenen Zusatzsignale aus dem übertragenen Signal,
- einer Amplitudenanpassungsstufe (15), in welcher die Amplituden der Zusatzsignale in ihren ursprünglichen Bereich rückumgewandelt werden,
- einer Speichereinheit (9, 17) zur Zwischenspeicherung des zweiten Videosignals und der Zusatzsignale,
- einer Speichersteuerschaltung (11), die den Auslesevorgang aus der Speichereinheit derart steuert, daß die Zusatzsignale in zeitlich richtiger Zuordnung zum zweiten Videosignal aus der Speichereinheit ausgelesen werden, und
- einem Konverter (10), der aus dem zweiten Videosignal und den Zusatzsignalen ein Videosignal mit dem im Vergleich zum herkömmlichen Bildbreiten- zu Bildhöhen-Verhältnis vergrößerten Bildbreiten- zu Bildhöhen-Verhältnis regeneriert,
**dadurch gekennzeichnet,** daß
- im Signalweg der Zusatzsignale ein Frequenzumsetzer (16) zur Rückumwandlung der Zusatzsignale in ihren ursprünglichen Frequenzbereich vorgesehen ist.

8. Empfänger nach Anspruch 7, **dadurch gekennzeichnet,** daß der zweite Frequenzumsetzer (16) einen Demodulator (162) aufweist.

9. Empfänger nach Anspruch 8, **dadurch gekennzeichnet,** daß dem Demodulator (162) ein Hochpaßfilter (161) vorgeschaltet ist.

10. Empfänger nach Anspruch 8 oder 9, **dadurch gekennzeichnet,** daß das Ausgangssignal des Demodulators (162) einem Tiefpaßfilter (163) zugeführt wird.

## Claims

1. Method for transmitting wide-angle video signals, in which
- at the transmitter end, a first video signal is produced having a conventional number of lines and a picture width to picture height ratio which is enlarged in comparison with the conventional picture width to picture height ratio, a second video signal having a reduced number of lines, and additional signals are determined from this first video signal, the amplitudes of the additional signals are placed into the ultra-black range, and the second video signal is inserted into lines which are located in the central part of the picture and the additional signals are inserted into lines which are located at the top and bottom picture edges, and
- at the receiver end, the additional signals which are transmitted in the lines which are located at the top and bottom picture edges are inserted, after time reorganization and reverse conversion of the amplitudes into their original range, into the signal which is transmitted in the central part of the picture,
characterized in that
the additional signals which are transmitted in lines which are located at the top and bottom picture edges have low-frequency signal elements removed from them at the transmitter end.

2. Transmitter for producing video signals which are transmitted using a method according to Claim 1, having
- a video signal source (1) which makes available at its output a first video signal having a conventional number of lines and a picture width to picture height ratio which is enlarged in comparison with the conventional picture width to picture height ratio,
- a converter (2) in which a second video signal having a reduced number of lines, and additional signals are determined from the first video signal,
- an amplitude matching stage (14) in which amplitudes of the additional signals are influenced in such a manner that the additional signals having a reduced level come to rest in the ultra-black region,
- a memory unit (3) for storing the second video signal and the additional signals, and
- a memory control circuit (4) which controls the reading process from the memory (3) in such a manner that the second video signal is inserted into lines which are located in the central part of the picture and the additional signals are inserted into lines which are located at the top and bottom picture edges,
characterized in that
a frequency converter (13), whose output signal is free of low-frequency elements, is provided in the signal path of the additional signals.

3. Transmitter according to Claim 2, characterized in that the first frequency converter (13) has a modulator (132) for modulation of a radio-frequency carrier with the additional signals.

4. Transmitter according to Claim 3, characterized in that a low-pass filter (131) is connected upstream of the modulator (132).

5. Transmitter according to Claim 3 or 4, characterized in that the output signal from the modulator (132) is fed to a high-pass filter (133).

6. Transmitter according to one or more of Claims 3 - 5, characterized in that the radio-frequency carrier is at a frequency which is derived from the colour sub-carrier frequency.

7. Receiver for reproduction of video signals which are transmitted using a method according to Claim 1, having
- a first separation circuit (7) for separating the second video signal, which is transmitted in the central part of the picture, from the transmitted signal,
- a second separation circuit (8) for separating the additional signals, which are transmitted at the top and bottom picture edges, from the transmitted signal,
- an amplitude matching stage (15) in which the amplitudes of the additional signals are converted back into their original range,
- a memory unit (9, 17) for buffer storage of the second video signal and of the additional signals,
- a memory control circuit (11) which controls the reading process from the memory unit in such a manner that the additional signals are read out of the memory unit such that they are associated correctly in time with the second video signal, and
- a converter (10) which uses the second video signal and the additional signals to regenerate a video signal having the picture width to picture height ratio which is enlarged in comparison with the conventional picture width to picture height ratio,
characterized in that
- a frequency converter (16) for reverse conversion of the additional signals into their original frequency range is provided in the signal path of the additional signals.

8. Receiver according to Claim 7, characterized in that the second frequency converter (16) has a demodulator (162).

9. Receiver according to Claim 8, characterized in that a high-pass filter (161) is connected upstream of the demodulator (162).

10. Receiver according to Claim 8 or 9, characterized in that the output signal from the demodulator (162) is fed to a low-pass filter (163).

## Revendications

1. Procédé pour transmettre des signaux vidéo d'images larges, selon lequel
- côté émission, un premier signal vidéo possédant un nombre usuel de lignes et un rapport de la largeur à la hauteur de l'image accru par rapport au rapport usuel de la largeur à la hauteur de l'image est produit, un second signal vidéo possédant un nombre réduit de lignes et des signaux supplémentaires sont obtenus à partir de ce premier signal vidéo, les amplitudes des signaux supplémentaires sont réglées dans la gamme de l'ultranoir, et le second signal vidéo est inséré dans des lignes situées dans la partie centrale de l'image, et les signaux supplémentaires sont insérés dans des lignes situées au niveau du bord supérieur et du bord inférieur de l'image, et
- côté réception, les signaux supplémentaires transmis dans des lignes situées au niveau du bord supérieur et du bord inférieur de l'image, sont insérés, après réarrangement dans le temps et retour des amplitudes par conversion dans leur gamme initiale, dans le signal transmis dans la partie centrale de l'image,
caractérisé en ce que des composantes à basses fréquences des signaux supplémentaires, transmis dans des lignes situées au niveau du bord supérieur et du bord inférieur de l'image, sont éliminées côté émission.

2. Émetteur pour produire des signaux vidéo, qui sont transmis selon un procédé conforme à la revendication 1, comprenant
- une source de signaux vidéo (1), qui délivre, à sa sortie, un premier signal vidéo possédant un nombre usuel de lignes et un rapport de la largeur à la hauteur de l'image accru par rapport au rapport usuel de la largeur à la hauteur de l'image,
- un convertisseur (2), dans lequel un second signal vidéo possédant un nombre réduit de lignes et des signaux supplémentaires est formé à partir du premier signal vidéo,
- un étage d'adaptation d'amplitudes (14), dans lequel les amplitudes des signaux supplémentaires sont influencées de telle sorte que ces signaux peuvent venir se situer avec un niveau réduit, dans la gamme de l'ultranoir,
- une unité de mémoire (3) pour mémoriser le second signal vidéo et les signaux supplémentaires, et
- un circuit de commande de mémoire (4), qui commande le processus de lecture à partir de la mémoire (3) de telle sorte que le second signal vidéo est inséré dans les lignes situées dans la partie centrale de l'image, et les signaux supplémentaires sont insérés dans des lignes situées au niveau des bords supérieur et inférieur de l'image,
caractérisé par le fait que dans la voie de transmission des signaux supplémentaires est prévu un convertisseur de fréquence (13), dont le signal de sortie ne présente aucune composante de signal à basse fréquence.

3. Émetteur selon la revendication 2, caractérisé en ce que le premier convertisseur de fréquence (13) possède un modulateur (103) servant à réaliser la modulation d'une porteuse à haute fréquence, avec les signaux supplémentaires.

4. Émetteur selon la revendication 3, caractérisé en ce qu'un filtre passe-bas (131) est branché en amont du modulateur (132).

5. Émetteur selon la revendication 3 ou 4, caractérisé en ce que le signal de sortie du modulateur (132) est envoyé à un filtre passe-haut (133).

6. Émetteur selon une ou plusieurs des revendications 3-5, caractérisé en ce que la porteuse à haute fréquence possède une fréquence dérivée de la fréquence de la porteuse couleur.

7. Récepteur pour la reproduction de signaux vidéo, qui sont transmis selon un procédé conformément à la revendication 1, comportant
- un premier circuit de séparation (7) servant à séparer le second signal vidéo, transmis dans la partie centrale de l'image, par rapport au signal transmis,
- un second circuit de séparation (8) pour séparer les signaux supplémentaires, transmis au niveau des bords supérieur et inférieur de l'image, par rapport au signal transmis,
- un circuit d'adaptation d'amplitudes (15), dans lequel les amplitudes des signaux supplémentaires sont ramenées par conversion dans leur gamme initiale,
- une unité de mémoire (9,17) servant à mémoriser temporairement le second signal vidéo et les signaux supplémentaires,
- un circuit de commande de mémoire (11), qui commande le processus de lecture à partir de l'unité de mémoire de telle sorte que les signaux supplémentaires sont lus, à partir de l'unité de mémoire, selon une association temporelle correcte par rapport au second signal vidéo, et
- un convertisseur (10), qui régénère, à partir du second signal vidéo et des signaux supplémentaires, un signal vidéo comportant un rapport de la largeur à la hauteur de l'image, accru par rapport au rapport usuel de la largeur à la hauteur de l'image,
caractérisé par le fait que
- dans la voie de transmission des signaux supplémentaires est prévu un convertisseur de fréquence (16) servant à ramener les signaux supplémentaires par conversion, dans leur gamme initiale de fréquences.

8. Récepteur selon la revendication 7, caractérisé en ce que le second convertisseuences (16) contient un démodulateur (162).

9. Récepteur selon la revendication 8, caractérisé en ce qu'un filtre passe-haut (161) est connecté en amont du démodulateur (162).

10. Récepteur selon la revendication 8 ou 9, caractérisé en ce que le signal de sortie du démodulateur (162) est appliqué à un filtre passe-bas (163).
